# EUROPEAN PATENT APPLICATION

(11) **EP 4 804 456 A1**
(43) Date of publication of application: **09.09.2026**
(21) Application number: 26160310.4
(22) Date of filing: 24.02.2026
(51) Int. Cl.: H04L 9/08

(54) **QUANTUM KEY DISTRIBUTION (QKD) RECEIVING DEVICE AND METHOD**

(30) Priority: 03.03.2025 JP 2025032930
(71) Applicant: NEC Corporation, 108-8001 Tokyo (JP)
(72) Inventor: KAWAHARA, Hiroki, Tokyo, 108-8001 (JP); TAKAHASHI, Seigo, Tokyo, 108-8001 (JP)
(74) Representative: Vossius & Partner Patentanwälte Rechtsanwälte mbB

(57) **Abstract**

A quantum key distribution (QKD) receiving device includes N input ports connected to N transmission lines, respectively, the N transmission lines being relevant to a specific QKD link and respectively transmitting N divided optical signals obtained by division of an optical signal in a QKD transmission device and being connected to the QKD transmission device, a QKD receiving unit that performs at least quantum key distillation processing, a switch that switches a connection line connected to the QKD receiving unit via one of the input ports, among the N transmission lines, and a control unit that selects a switching destination line of the connection line from at least one transmission line excluding a first transmission line among the N transmission lines in a case where the first transmission line among the N transmission lines is the connection line and a communication failure of the first transmission line has occurred.

## Description

### INCORPORATION BY REFERENCE

This application is based upon and claims the benefit of priority from Japanese patent application No. 2025-032930, filed on March 3, 2025, the disclosure of which is incorporated herein in its entirety by reference.

### TECHNICAL FIELD

The present disclosure relates to a quantum key distribution (QKD) receiving device and method.

### BACKGROUND ART

In the field of optical communication, research for practical application of Quantum Key Distribution (QKD) has been conducted. A quantum key distribution system is a system that safely distributes a quantum key (common key). In the quantum key distribution system, a QKD transmission device modulates an optical signal by using, for example, key information and basis information, and transmits the modulated signal to a QKD receiving device (for example, JP 2016-163079 A).

In JP 2016-163079 A, a plurality of transmission lines is provided between a QKD transmission device and a QKD receiving device to achieve redundancy, and a path of an optical signal is switched from a first transmission path to a second transmission path in response to detection of a communication failure of the first transmission path.

### SUMMARY

However, in JP 2016-163079 A, since the transmission path is switched on the transmission side and the signal to be transmitted is also switched with the switching of the transmission path, there is a possibility that a time is required for processing of switching the transmission path.

An example object of the present disclosure is to provide a quantum key distribution (QKD) receiving device and method capable of implementing high-speed switching of a transmission path. It should be noted that the example object is merely one of a plurality of example objects to be achieved by a plurality of example embodiments disclosed herein. The other example objects or problems and novel features will be apparent from the description of the present specification or the accompanying drawings.

A quantum key distribution (QKD) receiving device according to an example aspect of the present disclosure includes N input ports connected to N transmission lines, respectively, the N transmission lines being relevant to a specific QKD link and respectively transmitting N divided optical signals obtained by division of an optical signal in a QKD transmission device and being connected to the QKD transmission device, where N is an integer equal to or more than 2, a QKD receiving unit that performs at least quantum key distillation processing, a switch that switches a connection line connected to the QKD receiving unit via one of the input ports, among the N transmission lines, and a control unit that selects a switching destination line of the connection line from at least one transmission line excluding a first transmission line among the N transmission lines in a case where the first transmission line among the N transmission lines is the connection line and a communication failure of the first transmission line has occurred.

A method according to an example aspect of the present disclosure is a method executed by a quantum key distribution (QKD) receiving device, the QKD receiving device including N input ports connected to N transmission lines, respectively, the N transmission lines being relevant to a specific QKD link and respectively transmitting N divided optical signals obtained by division of an optical signal in a QKD transmission device and being connected to the QKD transmission device, where N is an integer equal to or more than 2, the method including switching a connection line connected to a QKD receiving unit via one of the input ports, among the N transmission lines, and selecting a switching destination line of the connection line from at least one transmission line excluding a first transmission line among the N transmission lines in a case where the first transmission line among the N transmission lines is the connection line and a communication failure of the first transmission line has occurred.

The present disclosure can provide a quantum key distribution (QKD) receiving device and method capable of implementing high-speed switching of a transmission path.

### BRIEF DESCRIPTION OF DRAWINGS

The above and other aspects, features and advantages of the present disclosure will become more apparent from the following description of certain exemplary embodiments when taken in conjunction with the accompanying drawings, in which:
Fig. 1 is a diagram illustrating an example of a system of the present disclosure;
Fig. 2 is a block diagram illustrating an example of a QKD receiving device of the present disclosure;
Fig. 3 is a block diagram illustrating an example of a QKD transmission device of the present disclosure;
Fig. 4 is a block diagram illustrating an example of a management device of the present disclosure;
Fig. 5 is a flowchart diagram illustrating an example of a processing operation of the QKD receiving device of the present disclosure;
Fig. 6 is a sequence diagram illustrating an example of a processing operation of the management device of the present disclosure;
Fig. 7 is a block diagram illustrating another example of the QKD receiving device of the present disclosure;
Fig. 8 is a block diagram illustrating an example of the management device of the present disclosure;
Fig. 9 is a sequence diagram illustrating another example of the processing operation of the management device of the present disclosure;
Fig. 10 is a block diagram illustrating another example of the QKD receiving device of the present disclosure;
Fig. 11 is a block diagram illustrating another example of the QKD receiving device of the present disclosure;
Fig. 12 is a block diagram illustrating another example of the QKD receiving device of the present disclosure;
Fig. 13 is a block diagram illustrating another example of the QKD receiving device of the present disclosure; and
Fig. 14 is a block diagram illustrating another example of the QKD receiving device of the present disclosure.

### EXAMPLE EMBODIMENTS

Hereinafter, example embodiments will be described with reference to the drawings. In the present disclosure, the drawings can be associated with one or more example embodiments. In addition, each element of the drawings can be applied to one or more example embodiments. In addition, in the example embodiments, the same or equivalent elements are denoted by the same reference signs, and repeated description will be omitted.

### <First Example Embodiment>

### <Outline of System>

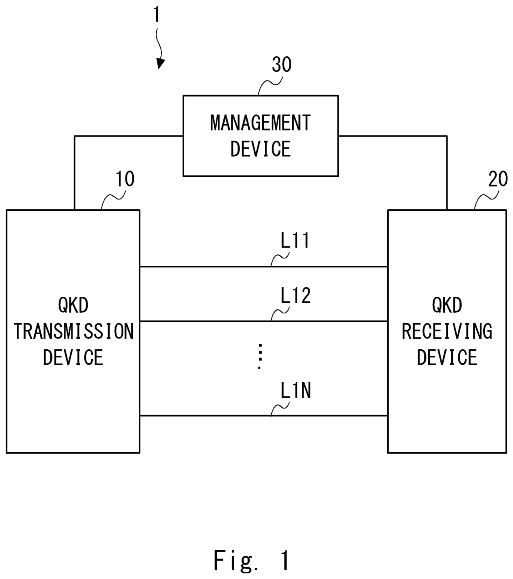

Fig. 1 is a diagram illustrating an example of a system of the present disclosure. In Fig. 1, a system 1 includes a quantum key distribution (QKD) transmission device 10, a QKD receiving device 20, and a management device 30. The management device 30 is a device that manages and controls a whole of the system 1. That is, the management device 30 is a host device of the QKD transmission device 10 and the QKD receiving device 20. The QKD transmission device 10 and the QKD receiving device 20 are connected to each other by N (N is an integer equal to or more than 2) optical transmission lines L11 to L1N. A quantum key is distributed from the QKD transmission device 10 to the QKD receiving device 20. A method by which the quantum key is distributed is not particularly limited, and may be, for example, a BB84 method or a Continuous Variable (CV)-QKD method.

For example, the QKD transmission device 10 selects a random bit string (that is, a seed key) and a random basis. Then, the QKD transmission device 10 modulates an optical signal to a signal state relevant to a combination of a bit value and the selected basis, and transmits the modulated optical signal to the QKD receiving device 20. At this time, the QKD transmission device 10 divides the modulated optical signal into N divided optical signals, and transmits the N divided optical signals through the optical transmission lines L11 to L1N, respectively. That is, one channel is relevant to the N optical transmission lines L11 to L1N. The QKD receiving device 20 selects a random basis, and obtains a bit value by measuring the received optical signal with the selected basis. Then, the QKD transmission device 10 and the QKD receiving device 20 share patterns of respective bases, and share a bit value of a portion of which the bases match as a shared key.

### <Configuration Example of QKD Receiving Device>

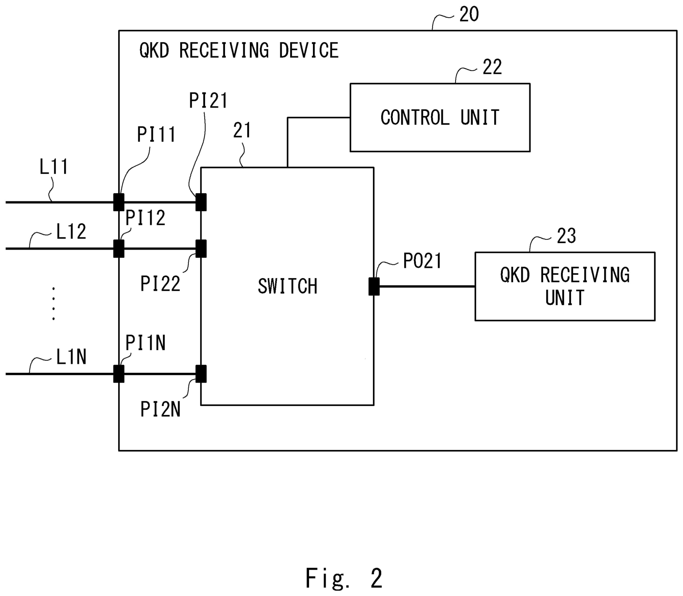

Fig. 2 is a block diagram illustrating an example of a QKD receiving device of the present disclosure. In Fig. 2, the QKD receiving device 20 includes a switch 21, a control unit 22, and a QKD receiving unit 23. In addition, the receiving device 20 includes N input ports PI11 to PI1N connected to the optical transmission lines L11 to L1N, respectively.

The switch 21 includes N input ports PI21 to PI2N and an output port PO21. The input ports PI21 to PI2N are directly or indirectly connected to the input ports PI11 to PI1N, respectively. The output port PO21 is connected to the QKD receiving unit 23.

The switch 21 switches the input port PI2 connected to the output port PO21, among the input ports PI21 to PI2N. That is, the switch 21 switches a "connection line" connected to the QKD receiving unit 23 via the input port PI1, the input port PI2, and the output port PO21, among the optical transmission lines L11 to L1N. The switch 21 may be an optical switch or an electrical switch. The switch 21 may be implemented by a switch circuit. In the following description, it is assumed that the switch 21 is an optical switch unless otherwise specified.

The QKD receiving unit 23 performs at least quantum key distillation processing. The QKD receiving unit 23 may be implemented by a combination of an optical signal processing circuit and an electrical signal processing circuit. The QKD receiving unit 23 may be implemented by an electrical signal processing circuit without including an optical signal processing circuit. Some functions of the QKD receiving unit 23 may be implemented by a processor reading and executing a program stored in a memory. That is, some functions of the QKD receiving unit 23 may be implemented by software.

The control unit 22 controls the switch 21 to switch the connection line. For example, in initial setting, the control unit 22 sets one optical transmission line L1 among the optical transmission lines L11 to L1N as a working line and sets remaining optical transmission lines L1 as spare lines. The initial setting may be performed based on transmission path setting information transmitted from the management device 30. For example, in a case where the transmission path setting information indicates that the optical transmission line L11 is "active" and the optical transmission lines L12 to L1N are on "standby", the control unit 22 controls the switch 21 to switch the connection line to the optical transmission line L11. As a result, the switch 21 connects the input port PI21 and the output port PO21 to each other. After the setting of the connection line is completed, the control unit 22 may execute a procedure of establishing a QKD link with the QKD transmission device 10.

In a case where the optical transmission line L11 is the connection line and a communication failure has occurred in the optical transmission line L11, the control unit 22 selects a switching destination line of the connection line from the optical transmission lines L12 to L1N excluding the optical transmission line L11. For example, in a case where the optical transmission line L12 is selected as the switching destination line, the control unit 22 controls the switch 21 to connect the input port PI22 and the output port PO21 of the switch 21 to each other. As a result, the optical transmission line L12 is a new connection line. After the switching to the new connection line, the QKD receiving unit 23 may execute resynchronization (clock, bit level, and frame level resynchronization) of the received signal and resume key generation.

The control unit 22 may notify (report) the management device 30 of information regarding the switching destination line (that is, the connection line after the switching).

The control unit 22 may be implemented by a dedicated circuit. Alternatively, the control unit 22 may be implemented by a processor reading and executing a program stored in a memory. That is, the control unit 22 may be implemented by software.

### <Configuration Example of QKD Transmission Device>

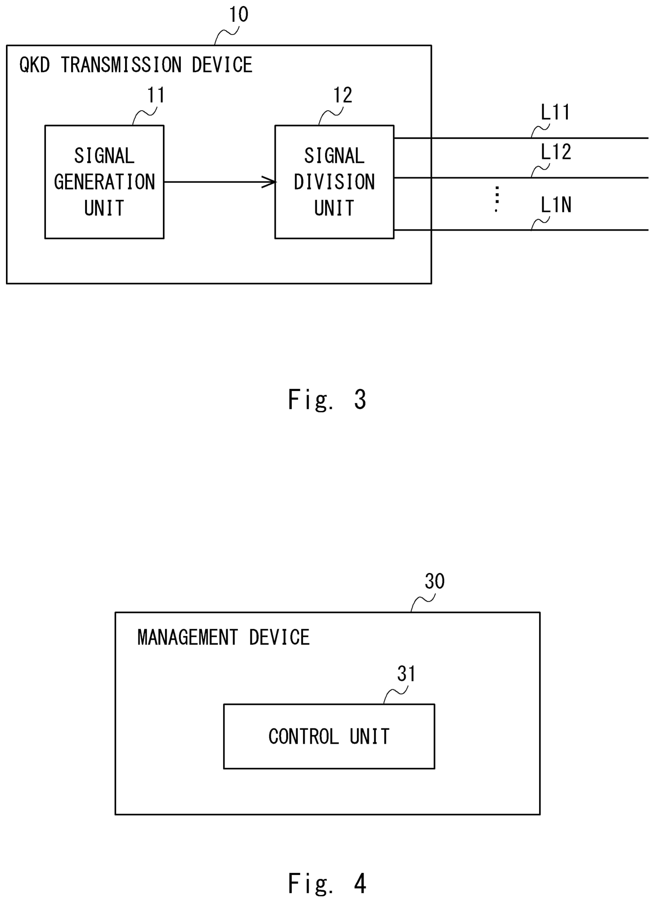

Fig. 3 is a block diagram illustrating an example of a QKD transmission device of the present disclosure. In Fig. 3, the QKD transmission device includes a signal generation unit 11 and a signal division unit 12.

The signal generation unit 11 generates a signal to be transmitted to the QKD receiving device 20. The signal to be transmitted to the QKD receiving device 20 includes, for example, a quantum signal, a synchronization signal, and a classical signal. The quantum signal is, for example, an optical signal relevant to a seed key. The classical signal is, for example, an optical signal relevant to the above-described basis pattern. The quantum signal, the synchronization signal, and the classical signal are transmitted by a quantum channel, a synchronization channel, and a classical channel in which wavelengths to be used are different from each other. For the classical channel, transmission may be performed through an optical transmission channel different from the optical transmission lines L11 to L1N described above.

The signal division unit 12 is, for example, a 1 : N optical coupler. The signal division unit 12 divides an optical signal output from the signal generation unit 11 into N, and sends the N divided optical signals to the optical transmission lines L11 to L1N, respectively. As a result, the same optical signals are transmitted to the optical transmission lines L11 to L1N substantially at the same time, and are received substantially at the same time by the QKD receiving device 20. Thus, redundancy is achieved.

### <Configuration Example of Management Device>

Fig. 4 is a block diagram illustrating an example of a management device of the present disclosure. In Fig. 4, the management device 30 includes a control unit 31.

The control unit 31 transmits, to the QKD receiving device 20, transmission path setting information indicating connection states of the optical transmission lines L11 to L1N. For example, the transmission path setting information indicates that the optical transmission line L11 is "active" and the optical transmission lines L12 to L1N are on "standby". As described above, the optical transmission line set to "active" is set as the connection line, that is, the working line. That is, the connection line can be designated by the transmission path setting information.

For example, the control unit 31 may manage a setting state with a transmission path setting table. For example, the transmission path setting table may hold an identification number of each optical transmission line L1, an identification number of the input port PI2 of the switch 21 relevant to the optical transmission line L1, and a state (that is, active or standby) of the optical transmission line L1 in association with each other.

After notification of the information regarding the switching destination line (that is, the connection line after the switching) from the QKD receiving unit 23, the control unit 31 updates the transmission path setting table, based on the information.

In a case where the optical transmission line L11 in which a communication failure has occurred recovers, the control unit 31 may transmit the transmission path setting information to the QKD receiving device 20 in order to return the optical transmission line L11 to the "active" state, that is, set the optical transmission line L11 again as the connection line.

The control unit 31 may be implemented by a dedicated circuit. Alternatively, the control unit 31 may be implemented by a processor reading and executing a program stored in a memory. That is, the control unit 31 may be implemented by software.

### <Operation Example of QKD Receiving Device>

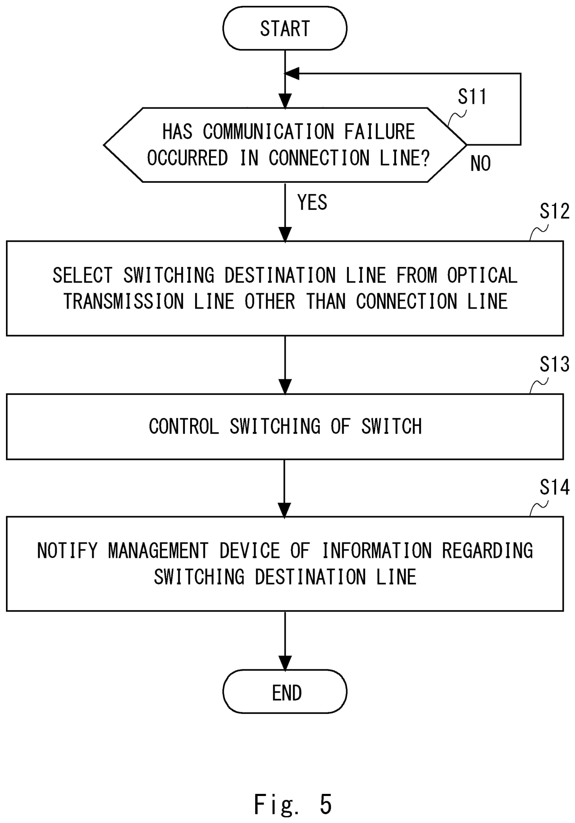

Fig. 5 is a flowchart diagram illustrating an example of a processing operation of the QKD receiving device of the present disclosure. Here, for the sake of explanation, it is assumed that the optical transmission line L11 is set as the "connection line" connected to the QKD receiving unit 23 as an initial stage.

The control unit 22 determines whether a communication failure of the optical transmission line L11 has occurred (step S11), and in a case where it is determined that a communication failure of the optical transmission line L11 has occurred (step S11 YES), the control unit 22 selects a switching destination line of the connection line from the optical transmission lines L12 to L1N (step S12).

The control unit 22 controls the switch 21 to connect the input port PI2 relevant to the selected switching destination line and the output port PO21 to each other (step S13).

The control unit 22 notifies the management device 30 of the information regarding the switching destination line (that is, the connection line after the switching) (step S14).

### <Operation Example of Management Device>

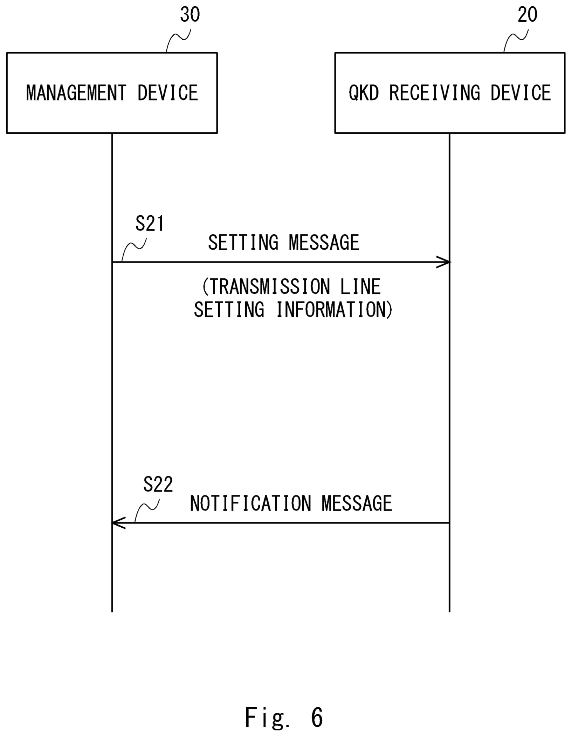

Fig. 6 is a sequence diagram illustrating an example of a processing operation of the management device of the present disclosure.

The management device 30 transmits a setting message including the above-described transmission path setting information to the QKD receiving device 20 (step S21). The QKD receiving device 20 sets the connection line, based on the transmission path setting information. Then, after a communication failure of the connection line is detected, the QKD receiving device 20 switches the connection line to the switching destination line. The QKD receiving device 20 transmits a notification message notifying of the information regarding the switching destination line (that is, the connection line after the switching) to the management device 30.

The management device 30 receives the notification message transmitted from the QKD receiving device 20 (step S22).

As described above, according to the first example embodiment, the QKD receiving device 20 includes the N input ports PI11 to PI1N connected to the optical transmission lines L11 to L1N, respectively. The optical transmission lines L11 to L1N are relevant to a specific QKD link and respectively transmit N divided optical signals obtained by division of an optical signal in the QKD transmission device 10, and each transmission line L1 is connected to the QKD transmission device 10. In the QKD receiving device 20, the switch 21 switches the connection line connected to the QKD receiving unit 23 via the input port PI1 (input port PI2), among the optical transmission lines L11 to L1N. In a case where the optical transmission line L11 is the connection line and a communication failure has occurred in the optical transmission line L11, the control unit 22 selects the switching destination line of the connection line from the optical transmission lines L12 to L1N.

With the configuration of the QKD receiving device 20, in a case where a communication failure has occurred in the connection line, the connection line can be switched to the switching destination line, and the same optical signal as that on the optical transmission line before the switching can be received immediately after the switching, so that high-speed switching of the transmission line can be implemented. As a result, a system non-operating time can be minimized, and availability can be improved.

### <Second Example Embodiment>

A second example embodiment relates to an example embodiment in which a switching destination line is selected based on an optical level on each of at least one optical transmission line other than a connection line in which a communication failure has occurred. Since a basic configuration of a system according to the second example embodiment is the same as the system 1 according to the first example embodiment, a description will be given with reference to Fig. 1. That is, the system 1 of the second example embodiment includes a QKD receiving device 40 and a management device 50 to be described later instead of the QKD receiving device 20 and the management device 30.

### <Configuration Example of QKD Receiving Device>

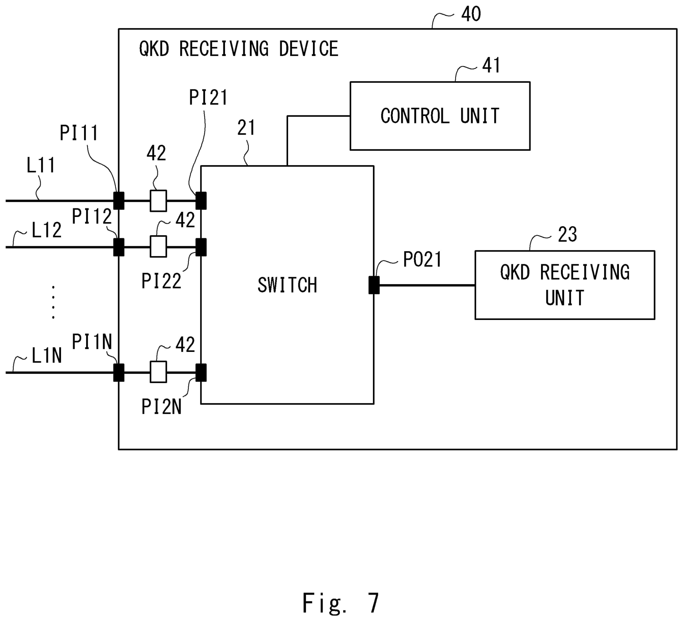

Fig. 7 is a block diagram illustrating another example of the QKD receiving device of the present disclosure. In Fig. 7, the QKD receiving device 40 includes a control unit 41 and N optical level detection units (sensors) 42. Although not illustrated in Fig. 7, the control unit 41 and each sensor 42 are connected to each other.

The N sensors 42 are disposed at output stages of the N input ports PI11 to PI1N, respectively. Then, each sensor 42 constantly detects an optical level at the corresponding input port PI1 (that is, on the optical transmission line L1). Then, each sensor 42 outputs the detected optical level to the control unit 41.

The control unit 41 determines that a communication failure has occurred in the connection line, based on a comparison result between the optical level relevant to the optical transmission line L1 set as the connection line and a threshold. For example, in a case where the optical level relevant to the optical transmission line L1 set as the connection line falls below the threshold, the control unit 41 determines that a communication failure has occurred in the connection line. The threshold may be set based on threshold information transmitted from the management device 50. A value of the threshold is, for example, a value corresponding to a level at which input interruption can be determined without error with respect to a reception level of the synchronization signal or reception levels of the synchronization signal and the classical signal. For example, the value of the threshold may be a value of (reception level at normal time + level at time of input interruption)/2.

In a case where the optical transmission line L11 is the connection line and a communication failure has occurred in the optical transmission line L11, the control unit 41 selects a switching destination line of the connection line from the optical transmission lines L12 to L1N, based on the optical level on each of the optical transmission lines L12 to L1N. For example, the control unit 41 selects, as the switching destination line, a transmission line on which the optical level is highest among the optical transmission lines L12 to L1N. Then, the control unit 41 switches the connection line to the selected switching destination line. As a result, an optical transmission line having the minimum loss in the optical transmission line is selected, so that key generation performance after the switching can be maximized.

The control unit 41 may be implemented by a dedicated circuit. Alternatively, the control unit 41 may be implemented by a processor reading and executing a program stored in a memory. That is, the control unit 41 may be implemented by software.

### <Configuration Example of Management Device>

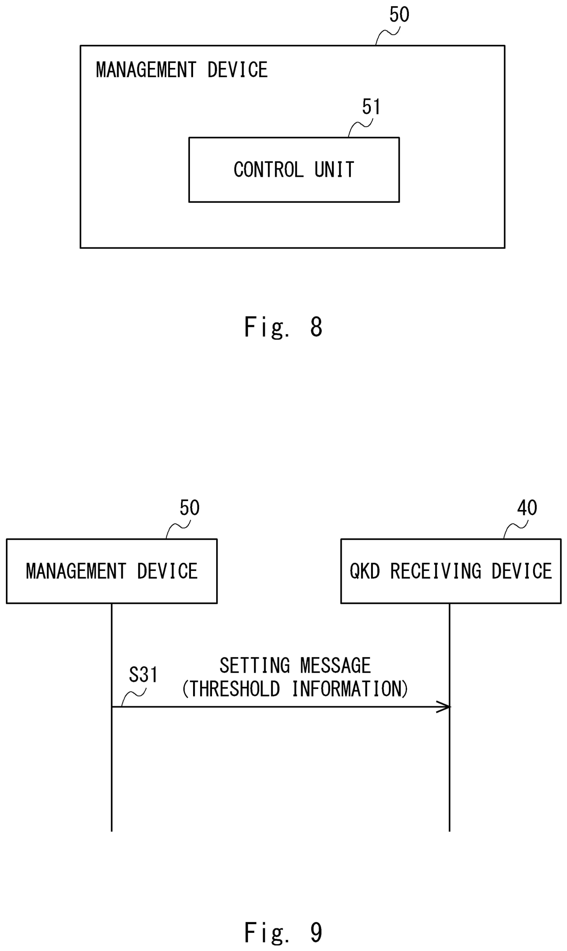

Fig. 8 is a block diagram illustrating an example of the management device of the present disclosure. In Fig. 8, the management device 50 includes a control unit 51.

Similarly to the control unit 31, the control unit 51 transmits, to the QKD receiving device 40, transmission path setting information indicating connection states of the optical transmission lines L11 to L1N. Similarly to the control unit 31, the control unit 51 may manage a setting state with a transmission path setting table.

The control unit 51 transmits a setting message including information (threshold information) regarding the threshold used for communication failure determination by the control unit 41. The setting message may be the same as or different from the setting message for transmitting the transmission path setting information. That is, the transmission path setting information and the threshold information may be transmitted in one setting message, or may be transmitted in separate setting messages.

The control unit 51 may be implemented by a dedicated circuit. Alternatively, the control unit 51 may be implemented by a processor reading and executing a program stored in a memory. That is, the control unit 51 may be implemented by software.

### <Operation Example of Management Device>

Fig. 9 is a sequence diagram illustrating another example of the processing operation of the management device of the present disclosure.

The management device 50 transmits the setting message including the threshold information described above to the QKD receiving device 40 (step S31). Based on the threshold information, the QKD receiving device 40 sets a threshold used for determination of a communication failure.

As described above, according to the second example embodiment, in a case where a communication failure of the connection line has occurred in the QKD receiving device 40, the switching destination line of the connection line is selected from at least one optical transmission line other than the connection line, based on the optical level on each of the plurality of optical transmission lines.

With the QKD receiving device 40, an optical transmission line having the minimum loss in the optical transmission line can be selected, so that the key generation performance after the switching can be maximized.

### <Third Example Embodiment>

A third example embodiment relates to a variation of a switching trigger of a connection line. Since a basic configuration of a system according to the third example embodiment is the same as the system 1 according to the first example embodiment, a description will be given with reference to Fig. 1. That is, the system 1 of the third example embodiment includes a QKD receiving device 60 to be described later instead of the QKD receiving device 20. The system 1 of the third example embodiment includes the management device 30 or the management device 50.

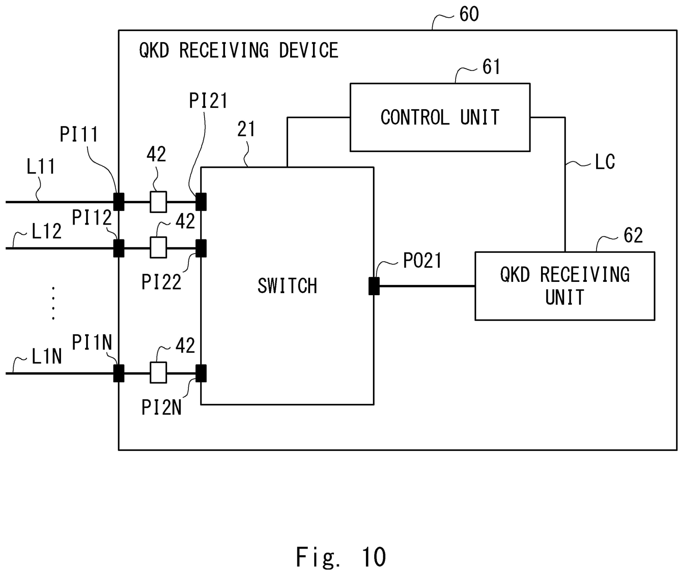

Fig. 10 is a block diagram illustrating another example of the QKD receiving device of the present disclosure. In Fig. 10, the QKD receiving device 60 includes a control unit 61, a QKD receiving unit 62, and N optical level detection units (sensors) 42. Although not illustrated in Fig. 10, the control unit 61 and each sensor 42 are connected to each other.

The control unit 61 is connected to the QKD receiving unit 62 via a control line LC. In a case where a switching trigger signal is received from the QKD receiving unit 62 via the control line LC, the control unit 61 determines that a communication failure has occurred in the connection line.

The QKD receiving unit 62 may output the above-described switching trigger signal to the control unit 61 in a case where a following event occurs.
(Event 1) A Loss of Signal (LOS) alarm related to the classical signal or the synchronization signal is issued.
(Event 2) A Loss of Frame (LOF) alarm due to out of synchronization-frame is issued.

### Communication path failure detection:

(Event 3) Photon detection efficiency difference detection: A ratio of the number of detected photons between Y0/Y1 and Z0/Z1 is equal to or more than a threshold.
(Event 4) Bright light detection: A PD monitor of a Bob-received-light level is equal to or more than a threshold.

### Performance abnormality detection:

(Event 5) Performance deterioration: A QKD key generation rate is equal to or less than a threshold.
(Event 6) Eavesdropping detection: QBER is equal to or more than a threshold.

In a case where a communication failure of the connection line has occurred, similarly to the control unit 41, the control unit 61 selects a switching destination line of the connection line from at least one optical transmission line L1 other than the connection line, based on the optical level on each of the plurality of optical transmission lines L1.

The control unit 61 may be implemented by a dedicated circuit. Alternatively, the control unit 61 may be implemented by a processor reading and executing a program stored in a memory. That is, the control unit 61 may be implemented by software.

### <Fourth Example Embodiment>

A fourth example embodiment relates to an example embodiment in which the switch is an electrical switch. Since a basic configuration of a system according to the fourth example embodiment is the same as the system 1 according to the first example embodiment, a description will be given with reference to Fig. 1. That is, the system 1 of the fourth example embodiment includes a QKD receiving device 70 to be described later instead of the QKD receiving device 20. The system 1 of the fourth example embodiment includes the management device 30 or the management device 50.

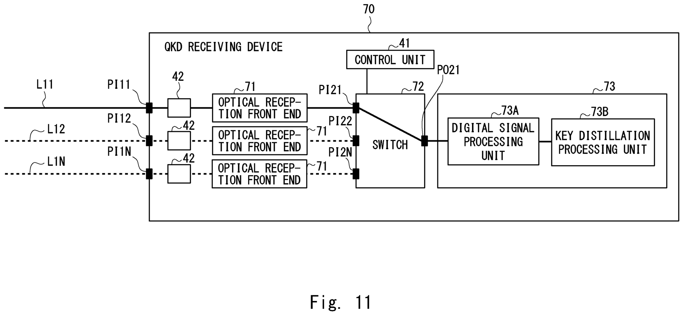

Fig. 11 is a block diagram illustrating another example of the QKD receiving device of the present disclosure. In Fig. 11, the QKD receiving device 70 includes optical reception front ends 71, a switch 72, and a QKD receiving unit 73. Although not illustrated in Fig. 11, the control unit 41 and each sensor 42 are connected to each other.

The optical reception front ends 71 are disposed at output stages of the respective optical level detection units (sensors) 42. Each optical reception front end 71 performs processing such as optical-to-electrical conversion or analog-digital conversion. The optical reception front end 71 converts an input optical signal into an electrical signal and outputs the electrical signal to the switch 72. The optical reception front end 71 may be implemented by a combination of an optical signal processing circuit and an electrical signal processing circuit.

The switch 72 is disposed between the optical reception front end 71 and the QKD receiving unit 73. The switch 72 is an electrical switch. The switch 72 may be implemented by a switch circuit. Then, similarly to the switch 21, the switch 72 switches the input port PI2 connected to the output port PO21 among the input ports PI21 to PI2N in accordance with control of the control unit 41. That is, the switch 72 switches the connection line in accordance with control of the control unit 41. Also in the fourth example embodiment, the control unit 41 determines that a communication failure has occurred in the connection line, based on a comparison result between the optical level relevant to the connection line and the threshold. In a case where a communication failure of the connection line has occurred, the control unit 41 selects the switching destination line of the connection line from at least one optical transmission line L1 other than the connection line, based on the optical level on each of the plurality of optical transmission lines L1. Then, the control unit 41 switches the connection line to the selected switching destination line.

The QKD receiving unit 73 includes a digital signal processing unit 73A and a key distillation processing unit 73B. The digital signal processing unit 73A executes digital signal processing such as demodulation processing. The key distillation processing unit 73B executes key distillation processing and the like. The QKD receiving unit 73 may be implemented by a dedicated electrical signal processing circuit. The QKD receiving unit 73 may be implemented by a processor reading and executing a program stored in a memory. That is, a function of the QKD receiving unit 73 may be implemented by software.

### <Modified Example of Fourth Example Embodiment>

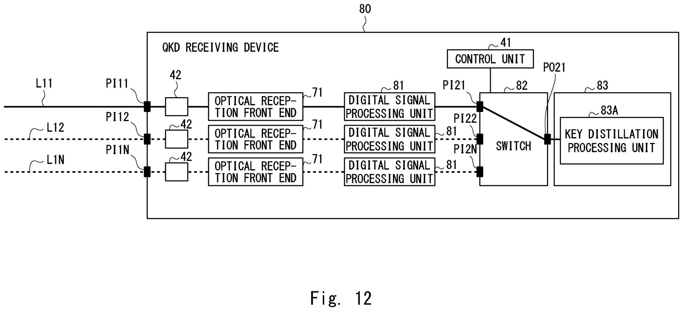

Fig. 12 is a block diagram illustrating another example of the QKD receiving device of the present disclosure. As illustrated in Fig. 12, a switch 82 may be disposed between a digital signal processing unit 81 and a QKD receiving unit 83.

In Fig. 12, a QKD receiving device 80 includes digital signal processing units 81, the switch 82, and the QKD receiving unit 83. Although not illustrated in Fig. 12, the control unit 41 and each sensor 42 are connected to each other.

Each digital signal processing unit 81 is disposed between the optical reception front end 71 and the switch 82. The digital signal processing unit 81 executes digital signal processing such as demodulation processing. The digital signal processing unit 81 may be implemented by a dedicated electrical signal processing circuit. The digital signal processing unit 81 may be implemented by a processor reading and executing a program stored in a memory. That is, a function of the digital signal processing unit 81 may be implemented by software.

The switch 82 is disposed between the digital signal processing unit 81 and the QKD receiving unit 83. The switch 82 is an electrical switch. The switch 82 may be implemented by a switch circuit. Then, similarly to the switch 72, the switch 82 switches the input port PI2 connected to the output port PO21 among the input ports PI21 to PI2N in accordance with control of the control unit 41. That is, the switch 82 switches the connection line in accordance with control of the control unit 41.

The QKD receiving unit 83 includes a key distillation processing unit 83A. The key distillation processing unit 83A executes key distillation processing and the like. The QKD receiving unit 83 may be implemented by a dedicated electrical signal processing circuit. The QKD receiving unit 83 may be implemented by a processor reading and executing a program stored in a memory. That is, a function of the QKD receiving unit 83 may be implemented by software.

### <Fifth Example Embodiment>

A fifth example embodiment relates to a variation of a switching trigger of a connection line. Since a basic configuration of a system according to the fifth example embodiment is the same as the system 1 according to the first example embodiment, a description will be given with reference to Fig. 1. That is, the system 1 of the fifth example embodiment includes a QKD receiving device 90 to be described later instead of the QKD receiving device 20. The system 1 of the fifth example embodiment includes the management device 30 or the management device 50.

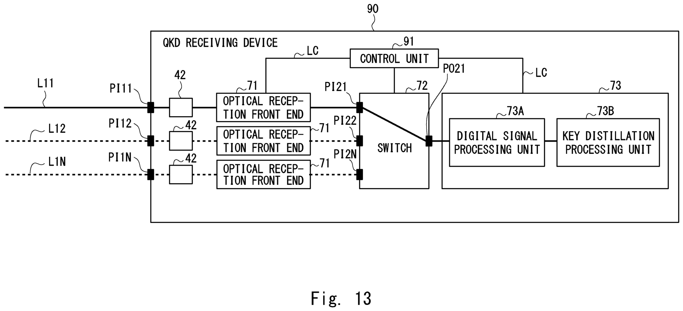

Fig. 13 is a block diagram illustrating another example of the QKD receiving device of the present disclosure. In Fig. 13, the QKD receiving device 90 includes a control unit 91. Although not illustrated in Fig. 13, the control unit 91 and each sensor 42 are connected to each other.

The control unit 91 is connected to each optical reception front end 71 via a control line LC. The control unit 91 is connected to the QKD receiving unit 73.

The control unit 91 receives a switching trigger signal from the optical reception front end 71 or the digital signal processing unit 73A in a case where a following event occurs. Then, in a case where the switching trigger signal is received from the optical reception front end 71 or the digital signal processing unit 73A, the control unit 91 determines that a communication failure has occurred in the connection line.
(Event 1) A Loss of Signal (LOS) alarm related to the classical signal or the synchronization signal is issued.
(Event 2) A Loss of Frame (LOF) alarm due to out of synchronization-frame is issued.

### Performance abnormality detection:

(Event 3) Performance deterioration: A QKD key generation rate is equal to or less than a threshold.
(Event 4) Eavesdropping detection: QBER is equal to or more than a threshold.

The control unit 91 may be implemented by a dedicated circuit. Alternatively, the control unit 91 may be implemented by a processor reading and executing a program stored in a memory. That is, the control unit 91 may be implemented by software.

### <Modified Example of Fifth Example Embodiment>

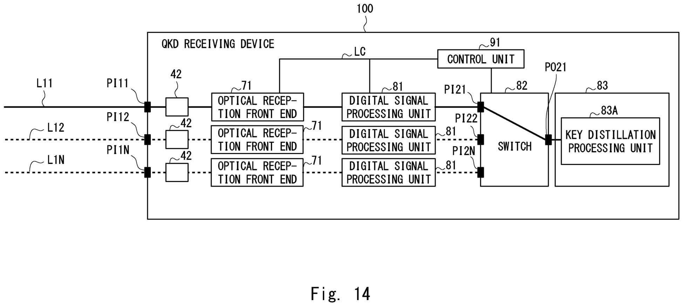

Fig. 14 is a block diagram illustrating another example of the QKD receiving device of the present disclosure. As illustrated in Fig. 14, in a QKD receiving device 100, the switch 82 may be disposed between the digital signal processing unit 81 and the QKD receiving unit 83.

In the QKD receiving device 100, the control unit 91 is connected to each optical reception front end 71 via a control line LC. The control unit 91 is connected to each digital signal processing unit 81 via a control line LC.

In a case where the above event occurs, the control unit 91 receives the switching trigger signal from the optical reception front end 71 or the digital signal processing unit 73A. Then, in a case where the switching trigger signal is received from the optical reception front end 71 or the digital signal processing unit 73A, the control unit 91 determines that a communication failure has occurred in the connection line.

While the present disclosure has been particularly shown and described with reference to example embodiments thereof, the present disclosure is not limited to these example embodiments. It will be understood by those of ordinary skill in the art that various changes in form and details may be made therein without departing from the sprit and scope of the present disclosure as defined by the claims. And each embodiment can be appropriately combined with at least one of embodiments.

Each of the drawings or figures is merely an example to illustrate one or more example embodiments. Each figure may not be associated with only one particular example embodiment, but may be associated with one or more other example embodiments. As those of ordinary skill in the art will understand, various features or steps described with reference to any one of the figures can be combined with features or steps illustrated in one or more other figures, for example to produce example embodiments that are not explicitly illustrated or described. Not all of the features or steps illustrated in any one of the figures to describe an example embodiment are necessarily essential, and some features or steps may be omitted. The order of the steps described in any of the figures may be changed as appropriate.

Some or all of the above example embodiments may also be described as the following supplementary notes, but are not limited to the following.

### (Supplementary note 1)

A quantum key distribution (QKD) receiving device including
N input ports connected to N transmission lines, respectively, the N transmission lines being relevant to a specific QKD link and respectively transmitting N divided optical signals obtained by division of an optical signal in a QKD transmission device and being connected to the QKD transmission device, where N is an integer equal to or more than 2,
a QKD receiving unit that performs at least quantum key distillation processing,
a switch that switches a connection line connected to the QKD receiving unit via one of the input ports, among the N transmission lines, and
a control unit that selects a switching destination line of the connection line from at least one transmission line excluding a first transmission line among the N transmission lines in a case where the first transmission line among the N transmission lines is the connection line and a communication failure of the first transmission line has occurred.

### (Supplementary note 2)

The QKD receiving device according to supplementary note 1, in which the control unit selects the switching destination line of the connection line, based on an optical level on the at least one transmission line.

### (Supplementary note 3)

The QKD receiving device according to supplementary note 2, in which the control unit selects, as the switching destination line, a transmission line on which the optical level is highest among the at least one transmission line.

### (Supplementary note 4)

The QKD receiving device according to any one of supplementary notes 1 to 3, in which the control unit receives transmission path setting information indicating connection states of the N transmission lines from a host device.

### (Supplementary note 5)

The QKD receiving device according to supplementary note 4, in which the control unit sets the first transmission line as the connection line in a case where the transmission path setting information indicates that the first transmission line among the N transmission lines is active and a transmission line other than the first transmission line is on standby.

### (Supplementary note 6)

The QKD receiving device according to supplementary note 2 or 3, in which the control unit determines that a communication failure has occurred in the first transmission line, based on a comparison result between the optical level of the first transmission line and a threshold.

### (Supplementary note 7)

The QKD receiving device according to supplementary note 6, in which the control unit receives information regarding the threshold from a host device.

### (Supplementary note 8)

The QKD receiving device according to any one of supplementary notes 1 to 3, in which the control unit reports information regarding the switching destination line selected to a host device.

### (Supplementary note 9)

The QKD receiving device according to any one of supplementary notes 1 to 3, further including a control line that connects the QKD receiving unit and the control unit to each other,
in which the control unit determines that a communication failure has occurred in the first transmission line in a case where a switching trigger is received from the QKD receiving unit via the control line.

### (Supplementary note 10)

The QKD receiving device according to supplementary note 2 or 3, further including a detection unit that detects an optical level on each transmission line.

### (Supplementary note 11)

A method executed by a quantum key distribution (QKD) receiving device,
the QKD receiving device including N input ports connected to N transmission lines, respectively, the N transmission lines being relevant to a specific QKD link and respectively transmitting N divided optical signals obtained by division of an optical signal in a QKD transmission device and being connected to the QKD transmission device, where N is an integer equal to or more than 2,
the method including
switching a connection line connected to a QKD receiving unit via one of the input ports, among the N transmission lines, and
selecting a switching destination line of the connection line from at least one transmission line excluding a first transmission line among the N transmission lines in a case where the first transmission line among the N transmission lines is the connection line and a communication failure of the first transmission line has occurred.

### (Supplementary note 12)

The method according to supplementary note 11, in which selecting the switching destination line includes selecting the switching destination line of the connection line, based on an optical level on the at least one transmission line.

### (Supplementary note 13)

The method according to supplementary note 12, in which selecting the switching destination line includes selecting, as the switching destination line, a transmission line on which the optical level is highest among the at least one transmission line.

### (Supplementary note 14)

The method according to any one of supplementary notes 11 to 13, further including receiving transmission path setting information indicating connection states of the N transmission lines from a host device.

### (Supplementary note 15)

The method according to supplementary note 14, further including setting the first transmission line as the connection line in a case where the transmission path setting information indicates that the first transmission line among the N transmission lines is active and a transmission line other than the first transmission line is on standby.

### (Supplementary note 16)

The method according to supplementary note 12 or 13, further including determining that a communication failure has occurred in the first transmission line, based on a comparison result between the optical level of the first transmission line and a threshold.

### (Supplementary note 17)

The method according to supplementary note 16, further including receiving information regarding the threshold from a host device.

### (Supplementary note 18)

The method according to any one of supplementary notes 11 to 13, further including reporting information regarding the switching destination line selected to a host device.

### (Supplementary note 19)

The method according to any one of supplementary notes 11 to 13, further including determining that a communication failure has occurred in the first transmission line, based on a switching trigger from the QKD receiving unit.

### (Supplementary note 20)

The method according to supplementary note 12 or 13, further including detecting an optical level on each transmission line.

### (Supplementary note 21)

A management device that controls a quantum key distribution (QKD) receiving device,
the QKD receiving device including
N input ports connected to N transmission lines, respectively, the N transmission lines being relevant to a specific QKD link and respectively transmitting N divided optical signals obtained by division of an optical signal in a QKD transmission device and being connected to the QKD transmission device, where N is an integer equal to or more than 2,
a QKD receiving unit that performs at least quantum key distillation processing, and
a switch that switches a connection line connected to the QKD receiving unit via one of the input ports, among the N transmission lines,
the management device including a control unit that transmits setting information indicating connection states of the N transmission lines to the QKD receiving device,
in which the setting information indicates that a first transmission line among the N transmission lines is active and a transmission line other than the first transmission line is on standby.

### (Supplementary note 22)

The management device according to supplementary note 21, in which the control unit transmits, to the QKD receiving device, information regarding an optical level threshold used by the QKD receiving device to determine a communication failure of the first transmission line.

### (Supplementary note 23)

A method executed by a management device that controls a quantum key distribution (QKD) receiving device,
the QKD receiving device including:
N input ports connected to N transmission lines, respectively, the N transmission lines being relevant to a specific QKD link and respectively transmitting N divided optical signals obtained by division of an optical signal in a QKD transmission device and being connected to the QKD transmission device, where N is an integer equal to or more than 2;
a QKD receiving unit that performs at least quantum key distillation processing; and
a switch that switches a connection line connected to the QKD receiving unit via one of the input ports, among the N transmission lines,
the method including transmitting setting information indicating connection states of the N transmission lines to the QKD receiving device,
in which the setting information indicates that a first transmission line among the N transmission lines is active and a transmission line other than the first transmission line is on standby.

### (Supplementary note 24)

The method according to supplementary note 23, further including transmitting, to the QKD receiving device, information regarding an optical level threshold used by the QKD receiving device to determine a communication failure of the first transmission line.

## Claims

1. A quantum key distribution (QKD) receiving device comprising:
N input ports connected to N transmission lines, respectively, the N transmission lines being relevant to a specific QKD link and respectively transmitting N divided optical signals obtained by division of an optical signal in a QKD transmission device and being connected to the QKD transmission device, where N is an integer equal to or more than 2;
QKD receiving means for performing at least quantum key distillation processing;
a switch that switches a connection line connected to the QKD receiving means via one of the input ports, among the N transmission lines; and
control means for selecting a switching destination line of the connection line from at least one transmission line excluding a first transmission line among the N transmission lines in a case where the first transmission line among the N transmission lines is the connection line and a communication failure of the first transmission line has occurred.

2. The QKD receiving device according to claim 1, wherein the control means selects the switching destination line of the connection line, based on an optical level on the at least one transmission line.

3. The QKD receiving device according to claim 2, wherein the control means selects, as the switching destination line, a transmission line on which the optical level is highest among the at least one transmission line.

4. The QKD receiving device according to any one of claims 1 to 3, wherein the control means receives transmission path setting information indicating connection states of the N transmission lines from a host device.

5. The QKD receiving device according to claim 4, wherein the control means sets the first transmission line as the connection line in a case where the transmission path setting information indicates that the first transmission line among the N transmission lines is active and a transmission line other than the first transmission line is on standby.

6. The QKD receiving device according to claim 2 or 3, wherein the control means determines that a communication failure has occurred in the first transmission line, based on a comparison result between the optical level of the first transmission line and a threshold.

7. The QKD receiving device according to claim 6, wherein the control means receives information regarding the threshold from a host device.

8. The QKD receiving device according to any one of claims 1 to 3, wherein the control means reports information regarding the switching destination line selected to a host device.

9. The QKD receiving device according to any one of claims 1 to 3, further comprising a control line that connects the QKD receiving means and the control means to each other,
wherein the control means determines that a communication failure has occurred in the first transmission line in a case where a switching trigger is received from the QKD receiving means via the control line.

10. A method executed by a quantum key distribution (QKD) receiving device,
the QKD receiving device including N input ports connected to N transmission lines, respectively, the N transmission lines being relevant to a specific QKD link and respectively transmitting N divided optical signals obtained by division of an optical signal in a QKD transmission device and being connected to the QKD transmission device, where N is an integer equal to or more than 2,
the method comprising:
switching a connection line connected to a QKD receiving means via one of the input ports, among the N transmission lines; and
selecting a switching destination line of the connection line from at least one transmission line excluding a first transmission line among the N transmission lines in a case where the first transmission line among the N transmission lines is the connection line and a communication failure of the first transmission line has occurred.

11. A management device that controls a quantum key distribution (QKD) receiving device,
the QKD receiving device including:
N input ports connected to N transmission lines, respectively, the N transmission lines being relevant to a specific QKD link and respectively transmitting N divided optical signals obtained by division of an optical signal in a QKD transmission device and being connected to the QKD transmission device, where N is an integer equal to or more than 2;
QKD receiving means for performing at least quantum key distillation processing; and
a switch that switches a connection line connected to the QKD receiving means via one of the input ports, among the N transmission lines,
the management device comprising control means for transmitting setting information indicating connection states of the N transmission lines to the QKD receiving device,
wherein the setting information indicates that a first transmission line among the N transmission lines is active and a transmission line other than the first transmission line is on standby.

12. The management device according to claim 11, wherein the control means transmits, to the QKD receiving device, information regarding an optical level threshold used by the QKD receiving device to determine a communication failure of the first transmission line.

13. A method executed by a management device that controls a quantum key distribution (QKD) receiving device,
the QKD receiving device including:
N input ports connected to N transmission lines, respectively, the N transmission lines being relevant to a specific QKD link and respectively transmitting N divided optical signals obtained by division of an optical signal in a QKD transmission device and being connected to the QKD transmission device, where N is an integer equal to or more than 2;
QKD receiving means for performing at least quantum key distillation processing; and
a switch that switches a connection line connected to the QKD receiving means via one of the input ports, among the N transmission lines,
the method comprising transmitting setting information indicating connection states of the N transmission lines to the QKD receiving device,
wherein the setting information indicates that a first transmission line among the N transmission lines is active and a transmission line other than the first transmission line is on standby.
